# EUROPEAN PATENT APPLICATION

(11) **EP 1 506 941 A1**
(43) Date of publication of application: **16.02.2005**
(21) Application number: 03725783.9
(22) Date of filing: 15.05.2003
(51) Int. Cl.: C02F 1/469, B01D 61/48

(54) **ELECTRIC DEMINERALIZER**

(30) Priority: 17.05.2002 JP 2002142558
(71) Applicant: EBARA CORPORATION, Ohta-ku, Tokyo 144-8510 (JP)
(72) Inventor: TAKAHASHI, Yohei, Kawasaki-shi, Kanagawa 211-0022 (JP); FUJIWARA, Kunio, Yokohama-shi, Kanagawa 244-0001 (JP); KAWAMOTO, Takayoshi, Chigasaki-shi, Kanagawa 253-0021 (JP); NAKANISHI, Syu, Atami-shi, Shizuoka 413-0003 (JP); AKIYAMA, Toru, Yokohama-shi, Kanagawa 225-0003 (JP); AKAHORI, Masaji, Kawasaki-shi, Kanagawa 212-0053 (JP); AOYAMA, Jun, Kawasaki-shi, Kanagawa 215-0018 (JP)
(74) Representative: Wagner & Geyer
(86) International application number: PCT/JP2003/006065
(87) International publication number: WO 2003/097536

(57) **Abstract**

The object of the present invention is to provide an electrical deionization apparatus capable of long-term operation at a low voltage. To achieve this object, the present invention is directed to an electrical deionization apparatus based on a completely new compartment configuration and provides an electrical deionization apparatus comprising multiple compartments separated by cation- and anion-exchange membranes arranged between anode and cathode, wherein the anion-exchange membrane on the anode side and the cation-exchange membrane on the cathode side together define a water splitting compartment, and wherein an anion deionization compartment defined between anion-exchange membranes is placed on the anode side of the water splitting compartment, and a cation deionization compartment defined between cation-exchange membranes is placed on the cathode side of the water splitting compartment.

## Description

### TECHNICAL FIELD

The present invention relates to improvements on the so-called electrical deionization apparatus and provides an electrical deionization apparatus based on a completely new compartment configuration which has not been intended for conventional apparatuses. In general, a system comprising multiple compartments separated by ion-exchange membranes arranged between electrodes is called an "electrodialyzer." Such a system is also called an "electrical deionization apparatus" when ion exchangers are filled into each of the formed compartments. In the present invention, the term "electrical deionization apparatus" is intended to also cover the concept of the above "electrodialyzer."

### BACKGROUND ART

An electrical deionization apparatus is designed to have concentration and deionization compartments formed by cation- and anion-exchange membranes arranged between positive and negative electrodes. Such an apparatus allows removal of ion components contained in a liquid to be treated by migrating and separating ions in the liquid from the deionization compartments through ion-exchange membranes into the concentration compartments under a potential gradient applied as the driving force.

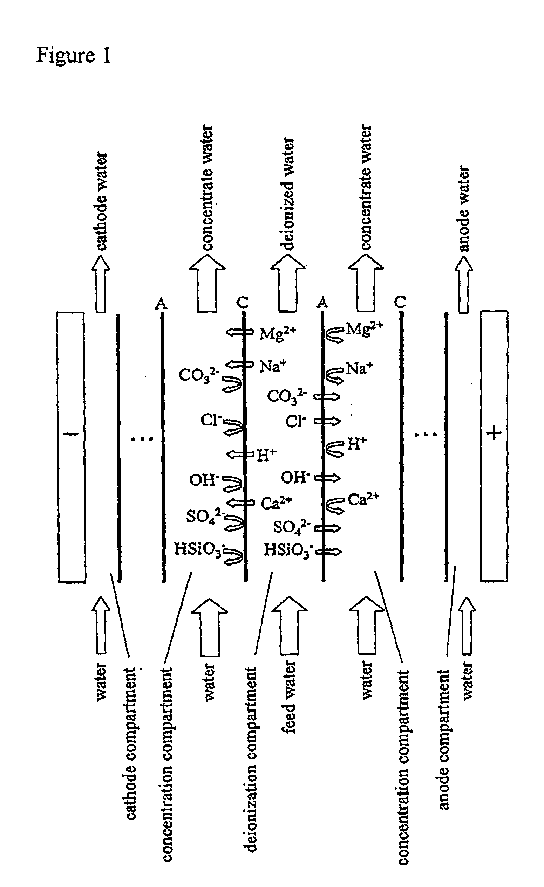

Figure 1 shows a conceptual illustration of a typical electrical deionization apparatus conventionally used. In the electrical deionization apparatus shown in Figure 1, anion-exchange (A) and cation-exchange (C) membranes are alternated with each other between cathode (-) and anode (+) to form an alternating array of deionization and concentration compartments. This alternating arrangement of anion- and cation-exchange membranes is repeated to form a parallel array of multiple deionization and concentration compartments. If desired, these deionization and concentration compartments are each filled with an ion exchanger(s) to facilitate ion migration in the compartments. Moreover, the compartments adjacent to the anode and cathode at both ends are generally called an "anode compartment" and a "cathode compartment," respectively, both of which serve to donate and accept current electrons applied by DC current. To operate such an electrical deionization apparatus, a voltage is applied between anode and cathode, while at the same time, the deionization compartments are supplied with an aqueous solution (salt solution) to be treated, and the concentration compartments and both electrode compartments are usually supplied with water. Water supplied to the concentration compartment is called "concentrate water" and the salt solution supplied to the deionization compartment is called "feed water." When feed water and concentrate water are thus introduced into the deionization and concentration compartments, respectively, cations and anions in the water are respectively attracted toward the cathode and anode. However, since ion-exchange membranes are selectively permeable to ions of the same charge, cations in the feed water (e.g., Ca²⁺, Na⁺, Mg²⁺, H⁺) migrate through the cation-exchange membrane (C) to enter the concentration compartment on the cathode side, whereas anions (e.g., Cl⁻, SO₄²⁻, HSiO₃⁻, CO₃²⁻, HCO₃⁻, OH⁻) migrate through the anion-exchange membrane (A) to enter the concentration compartment on the anode side. On the other hand, because of their barrier properties against ions of different charges, these ion-exchange membranes block the migration of anions and cations in the direction from the concentration compartment to the deionization compartment. As a result, the deionization compartments provide deionized water having a reduced ion concentration, while the concentration compartments provide concentrate water having an increased ion concentration.

According to such an electrical deionization apparatus, pure water of higher purity can be obtained as deionized water from impurity-free water comparable to RO (reverse osmosis)- treated water when used as feed water, by way of example. In recent years, there has been an increasing need to provide highly purified water, such as ultra-pure water for semiconductor production. To this end, such an electrical deionization apparatus has employed a strategy in which a mixture of cation- and anion-exchange resin beads is filled as an ion exchanger into the deionization compartments and/or the concentration compartments and/or the electrode compartments to facilitate ion migration in these compartments. In addition to this, other strategies have been proposed. For example, cation- and anion-exchange fiber materials (e.g., non-woven fabrics) are used as ion exchangers and placed on the cation- and anion-exchange membrane sides, respectively, to face each other in the deionization compartments, or a spacer or an ion-conducting spacer provided with an ion-conducting ability is loaded between these ion-exchange fiber materials. Alternatively, the concentration compartments are loaded with a spacer or an ion-conducting spacer provided with an ion-conducting ability. See PCT/JP99/01391 (WO99/48820).

Electrical deionization apparatuses of this type have the sites of contact between cation- and anion-exchange groups in the deionization and/or concentration compartments filled with ion exchangers. In particular, at the site of contact between cation- and anion-exchange groups in the deionization compartment, water splits (H₂O → H⁺ + OH⁻) under a potential gradient to allow continuous and efficient regeneration of the ion exchangers in the deionization compartment by the action of H⁺ and OH⁻ ions generated by water splitting, thus enabling the provision of ultra-pure water at high purity. This may be ascribed to water splitting for supplying H⁺ and OH⁻ ions to cation-and anion-exchange groups in compensation for a lack of counter ions against functional groups, which is locally induced at the site of contact between cation and anion exchangers because the migration of ions toward both electrodes is facilitated by the action of a spacer or an ion-conducting spacer which is loaded between cation- and anion-exchange fiber materials in the deionization compartment to form continuous layers filled with cation and anion exchangers. This may also be ascribed to the close distance between cation- and anion-exchange groups in the range of several A to several tens of Å, where a strong electric field is generated to facilitate water polarization and splitting, thus helping the ion exchangers to be regenerated without recombination of water. In addition to water, nonelectrolytes such as alcohols may also polarize and split under a strong electric field to give anions and cations, which can be removed by adsorption to functional groups. It should be noted that the mechanism of water splitting is explained in H. Strauhmann, J. American Chemical Society 1993, 54, 17, entitled "Better Bipolar Membranes."

However, in electrical deionization apparatuses of this type, H⁺ and OH⁻ ions generated by water splitting are used for regeneration exclusively in the deionization compartment where these ions are generated. Most (estimatively around 90%) of H⁺ and OH⁻ ions are not used for regeneration of the ion exchangers and therefore pass through ion-exchange membranes to enter the adjacent concentration compartments (see Figure 1). Then, these ions are recombined in each concentration compartment with H⁺ or OH⁻ ions transported from another deionization compartment on the other side. A large amount of energy is required to cause water splitting, which is one of the factors increasing the operating voltage of electrical deionization apparatuses. However, under present circumstances, for the above reason, most of energy used for water splitting is wasted as heat that is generated by recombination between H⁺ and OH⁻ ions in the concentration compartments.

Because of their alternating array of deionization and concentration compartments, conventional electrical deionization apparatuses also allow reaction between calcium ions and carbonate ions in the concentration compartments to produce calcium carbonate, which has been responsible for scale deposition.

Conventional electrical deionization apparatuses have further involved a problem of increased operating voltage when the thickness and number of deionization compartments are increased in order to improve the quality and/or throughput of treated water. The reason of this phenomenon may be considered as follows: When the apparatuses employs mixed bed deionization compartments (i.e., a mixed arrangement of different types of ion exchangers), water splitting and recombination (between H⁺ and OH⁻ ions) occur at every site in such deionization compartments to cause heat generation; thus, if thickness and number of deionization compartments are increased, probability of water splitting and recombination are increased, whereby heat generation from electric energy are enhanced.

Also, conventional electrical deionization apparatuses have been associated with a phenomenon in which their operating voltage increases over the course of the operating time. The inventors of the present invention have examined this phenomenon and have reached a conclusion that the voltage required for water splitting increases over the course of the operating time, which in turn is responsible for an increase in the operating voltage. The inventors of the present invention have further found that the increase in the voltage required for water splitting is due to conversion of functional groups on the ion exchangers into salt form and bonding between these functional groups, as well as organic pollution, etc. As used herein, the phrase "bonding between functional groups" refers to a phenomenon in which over the course of the operating time, functional groups on an anion exchanger and those on a cation exchanger are attracted to each other at the site of contact between the cation and anion exchangers by the action of their charges to cause ionic bonding between these functional groups, thereby inhibiting water splitting. Also as used herein, the phrase "voltage required for water splitting" can be defined to mean a potential difference between cation and anion exchangers in the deionization compartment. Namely, it has been found that in conventional electrical deionization apparatuses of multipass structure (in which individual deionization compartments are supplied in series with feed water), the voltage required for water splitting tends to increase most significantly in the first deionization compartment to which feed water is first supplied. This is not only because functional groups on ion-exchange resins are adsorbed with ions and hence converted into salt form to prevent water splitting from occurring on the resins, but also because organic pollutants such as humin are adsorbed to functional groups on the ion-exchange resins to cause an increase in the voltage required for water splitting.

### DISCLOSURE OF THE INVENTION

The inventors of the present invention have examined various factors affecting the operating voltage of electrical deionization apparatuses and have focused on the findings, for example, that the ratio between voltages required to cause water splitting and voltages required for ion conduction (in the deionization compartment) is about 20:1, and that only about 10% of H⁺ and OH⁻ ions is used effectively in current electrical deionization apparatuses. As a result, the inventors of the present invention have arrived at an idea that the operating voltage of electrical deionization apparatuses can be reduced by avoiding immediate recombination between H⁺ and OH⁻ ions generated by water splitting so as to make effective use of these ions for the whole apparatus.

Then, the inventors of the present invention have found that the operating voltage can be significantly reduced by designing an electrical deionization apparatus based on a completely new compartment configuration which had not been intended in conventional electrical deionization apparatuses. This finding led to the completion of the present invention.

Namely, one embodiment of the present invention relates to an electrical deionization apparatus comprising multiple compartments separated by cation- and anion-exchange membranes arranged between anode and cathode, wherein the anion-exchange membrane on the anode side and the cation-exchange membrane on the cathode side together define a water splitting compartment, and wherein an anion deionization compartment defined between anion-exchange membranes is placed on the anode side of said water splitting compartment and a cation deionization compartment defined between cation-exchange membranes is placed on the cathode side of said water splitting compartment.

### BRIEF DESCRIPTION OF DRAWINGS

Figure 1 is a conceptual illustration of a conventional electrical deionization apparatus.
Figure 2 is a conceptual illustration of an electrical deionization apparatus according to one embodiment of the present invention.
Figure 3 is a conceptual illustration of an electrical deionization apparatus according to another embodiment of the present invention.
Figure 4 is a conceptual illustration of an electrical deionization apparatus according to yet another embodiment of the present invention.
Figure 5 is a conceptual illustration of an electrical deionization apparatus according to yet another embodiment of the present invention.
Figure 6 shows the cell configuration of an electrical deionization apparatus according to one embodiment of the present invention.
Figure 7 is a conceptual illustration of the conventional multipass-type electrical deionization apparatus used in the comparative example.

### BEST MODE FOR CARRYING OUT THE INVENTION

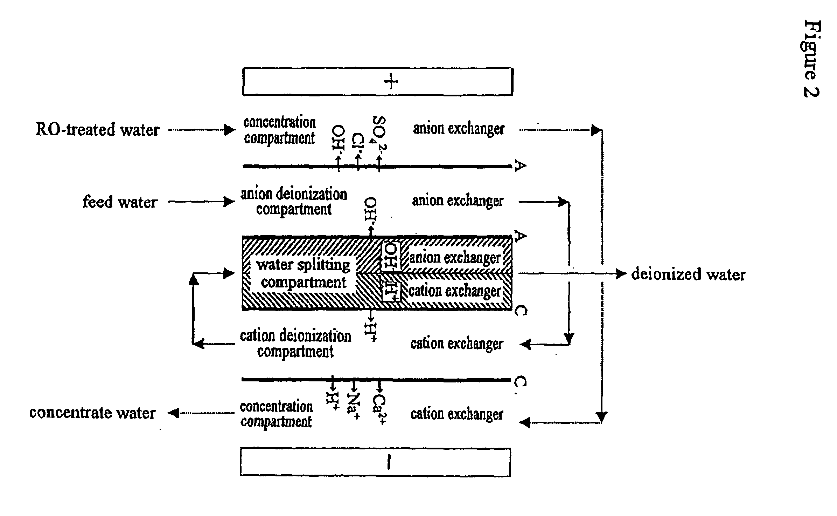

Detailed explanations will be given for various possible configurations for the electrical deionization apparatuses of the present invention. Figure 2 is a conceptual diagram showing a configuration example of an electrical deionization apparatus according to one embodiment of the present invention. In the center of the apparatus, a water splitting compartment is placed, which is defined by an anion-exchange membrane on the anode side and a cation-exchange membrane on the cathode side. In addition, an anion deionization compartment defined between anion-exchange membranes is placed on the anode side of the water splitting compartment, and a cation deionization compartment defined between cation-exchange membranes is placed on the cathode side of the water splitting compartment. The outer compartments (on the electrode side) of these deionization compartments serve as concentration compartments receiving ions permeating the ion-exchange membranes.

In the electrical deionization apparatus of the present invention, the water splitting compartment, the deionization compartment and the concentration compartment are each preferably filled with an ion exchanger(s). As shown in Figure 2, the water splitting compartment is preferably filled with cation and anion exchangers on the cation- and anion-exchange membrane sides, respectively. Further, the anion deionization compartment is preferably filled with an anion exchanger, while the cation deionization compartment is preferably filled with a cation exchanger. Also, the concentration compartment on the anode side is preferably filled with an anion exchanger in contact with the anion-exchange membrane and filled with a cation exchanger in contact with the anode, whereas the concentration compartment on the cathode side is preferably filled with a cation exchanger in contact with the cation-exchange membrane and filled with an anion exchanger in contact with the cathode. However, for example, a trace amount of a cation exchanger may be mixed into the anion exchanger filled in the anion deionization compartment or a trace amount of an anion exchanger may be mixed into the cation exchanger filled in the cation deionization compartment.

In operating the electrical deionization apparatus of the configuration shown in Figure 2, water is introduced into one of the concentration compartments and feed water is introduced into the anion deionization compartment. The concentration compartment is preferably introduced with impurity-free water comparable to RO-treated water. The water passed through the anion deionization compartment is then introduced into the cation deionization compartment and finally into the water splitting compartment. On the other hand, the water (concentrate water) drained from one concentration compartment is then introduced into another concentration compartment on the opposite side. Feed water is first treated in the anion deionization compartment, where anions (e.g., SO₄²⁻, Cl⁻) in the solution are adsorbed on the solid surface by ion exchange and attracted toward the anode through the solid phase to enter the adjacent concentration compartment across the anion-exchange membrane. The feed water is then introduced into the cation deionization compartment, where cations (e.g., Ca²⁺, Na⁺) in the solution are adsorbed on the solid surface by ion exchange and attracted toward the cathode through the solid phase to enter the adjacent concentration compartment across the cation-exchange membrane. In this way, impurity ions contained in the feed water are removed when passed through the anion and cation deionization compartments successively. The treated feed water from which impurity ions are removed is finally introduced into the water splitting compartment to ensure further removal of impurity ions remaining in the treated feed water (i.e., the water splitting compartment also serves as the final deionization compartment), simultaneously with water splitting at the site of contact between different types of ion exchangers to generate H⁺ and OH⁻. The generated H⁺ and OH⁻ are used for regeneration of the ion exchangers in the water splitting compartment. Then, H⁺ and OH⁻ remaining after regeneration of the ion exchangers in the water splitting compartment respectively pass through the cation- and anion-exchange membranes defining the water splitting compartment to enter the adjacent cation and anion deionization compartments, thus helping the ion exchangers in the respective deionization compartments to be regenerated. H⁺ and OH⁻ still remaining unconsumed in each deionization compartment further migrate to the outer compartments (indicated as concentration compartments in the configuration shown in Figure 2) across ion-exchange membranes.

In the electrical deionization apparatus of the present invention, because of the configuration stated above, the water passed through the anion and cation deionization compartments which has extremely low levels of impurity ions is supplied to the water splitting compartment where water splitting occurs, whereby it becomes possible to prevent the ion adsorption-induced conversion of functional groups into salt form and to prevent the humin adsorption-induced increase in the voltage required for water splitting. Moreover, it is possible to make effective use of H⁺ and OH⁻ because H⁺ and OH⁻ generated in the water splitting compartment do not stay exclusively within the water splitting compartment, but enter the adjacent deionization compartments, thus helping the ion exchangers in these compartments to be regenerated.

Although Figure 2 shows an embodiment in which feed water is supplied first to the anion deionization compartment and then to the cation deionization compartment, feed water may also be supplied first to the cation deionization compartment and then to the anion deionization compartment depending on its quality. For example, if feed water is relatively rich in calcium and hence associated with risks such as calcium scale deposition in the compartments and pipes, feed water is preferably supplied first to the cation deionization compartment to remove calcium ions in the feed water before introducing into the other compartments. Likewise, in a case where electrical deionization is performed for a long time on ammonia-rich feed water such as blowdown water from steam generators (SG) in atomic power stations, such treatment results in a gradual reduction of ammonia removal. In such a system, feed water may be supplied first to the cation deionization compartment to ensure a high level of ammonia removal. Further, although in Figure 2 the water collected from the concentration compartment on the anode side is then supplied to the concentration compartment on the cathode side, separate lines may also be provided for supplying and collecting water for these concentration compartments to prevent deposition of scale or the like in the concentration compartments.

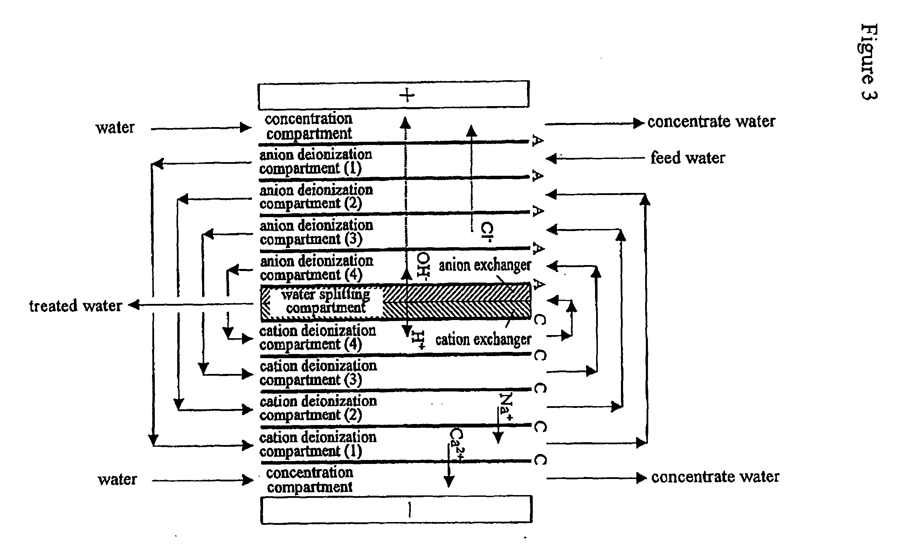

The electrical deionization apparatus of the present invention may also employ a continuous array of multiple anion and cation deionization compartments. Figure 3 shows a conceptual illustration of an electrical deionization apparatus according to such an embodiment. In the electrical deionization apparatus shown in Figure 3, an anion-exchange membrane (A) on the anode side and a cation-exchange membrane (C) on the cathode side together define a water splitting compartment. Multiple anion-exchange membranes are placed one after another on the anode side of the water splitting compartment to form a continuous array of multiple anion deionization compartments, while multiple cation-exchange membranes are placed one after another on the cathode side of the water splitting compartment to form a continuous array of multiple cation deionization compartments. The outermost compartments (on the electrode side) serve as concentration compartments receiving ions migrating from their adjacent deionization compartments. As in the case of an electrical deionization apparatus according to the embodiment shown in Figure 2, the water splitting compartment, the deionization compartment and the concentration compartment are each preferably filled with an ion exchanger(s). The water splitting compartment is preferably filled with anion and cation exchangers on the anion- and cation-exchange membrane sides, respectively. Likewise, the anion deionization compartments are each preferably filled with an anion exchanger, while the cation deionization compartments are each preferably filled with a cation exchanger. Also, the concentration compartment on the anode side is preferably filled with an anion exchanger in contact with the anion-exchange membrane and filled with a cation exchanger in contact with the anode, whereas the concentration compartment on the cathode side is preferably filled with a cation exchanger in contact with the cation-exchange membrane and filled with an anion exchanger in contact with the cathode.

In an electrical deionization apparatus having multiple deionization compartments as shown in Figure 3, feed water is preferably supplied to the deionization compartments in series, starting from the outer compartment (i.e., on the electrode side) and finally entering the water splitting compartment. For example, in the electrical deionization apparatus shown in Figure 3, feed water may be supplied first to the anion deionization compartment (1) and then to the cation deionization compartment (1), followed by the subsequent deionization compartments in the order stated below: the anion deionization compartment (2), the cation deionization compartment (2), the anion deionization compartment (3), the cation deionization compartment (3), the anion deionization compartment (4) and the cation deionization compartment (4). The feed water may be finally supplied to the water splitting compartment. In each anion deionization compartment, anions such as SO₄²⁻ and Cl⁻ in the feed water are adsorbed on the solid surface by ion exchange and attracted toward the anode through the solid phase to enter the next adjacent anion deionization compartment across the anion-exchange membrane. These anions are finally introduced into the concentration compartment on the anode side and discharged in the form of concentrate water. On the other hand, in each cation deionization compartment, cations such as Ca²⁺ and Na⁺ in the feed water are adsorbed on the solid surface by ion exchange and attracted toward the cathode through the solid phase to enter the next adjacent cation deionization compartment across the cation-exchange membrane. These cations are finally introduced into the concentration compartment on the cathode side and discharged in the form of concentrate water. As a result, the water passed through all the deionization compartments has extremely low levels of ions remaining in the water. This water is finally supplied to the water splitting compartment to ensure removal of the few remaining ions (i.e.. a role as the final deionization compartment), simultaneously with water splitting at the site of contact between different types of ion exchangers to generate H⁺ and OH⁻. H⁺ and OH⁻ generated in the water splitting compartment respectively pass through the cation- and anion-exchange membranes to enter the next adjacent deionization compartments, thus helping the ion exchangers in the respective deionization compartments to be regenerated. On the other hand, excess H⁺ and OH⁻ remaining after regeneration of the ion exchangers further enter the adjacent deionization compartments successively.

In the electrical deionization apparatus according to one embodiment of the present invention as shown in Figure 3, because of the configuration stated above, the water passed through the multiple anion and cation deionization compartments, which has extremely low levels of impurity ions, is supplied to the water splitting compartment where water splitting occurs, whereby it becomes possible to prevent the ion adsorption-induced conversion of functional groups into salt form and to prevent the humin adsorption-induced increase in the voltage required for water splitting. Moreover, it is possible to make highly effective use of H⁺ and OH⁻ for regeneration of ion exchangers while avoiding recombination between H⁺ and OH⁻ generated in the water splitting compartment because these ions do not stay exclusively within the water splitting compartment, but enter the adjacent deionization compartments successively, thus helping the ion exchangers in these compartments to be regenerated.

As shown in Figure 3, a continuous array of multiple anion and cation deionization compartments is also advantageous in ensuring strong regeneration of ion exchangers. Conventional electrical deionization apparatuses primarily utilize H⁺ and OH⁻ for regeneration of ion exchangers. However, in an electrical deionization apparatus of the configuration shown in Figure 3, when feed water is introduced as shown in Figure 3, Ca²⁺ is more likely to adsorb than Na⁺ and hence adsorbed to ion exchangers in an upstream cation deionization compartment (indicated as cation deionization compartment (1) in Figure 3). whereas Na⁺ is adsorbed to ion exchangers in a downstream cation deionization compartment (indicated as, e.g., cation deionization compartment (2) in Figure 3). Then, the Na⁺ ions adsorbed to ion exchangers in the cation deionization compartment (2) are attracted toward the cathode to enter the cation deionization compartment (1) across the cation-exchange membrane. These Na⁺ ions replace Ca²⁺ ions, and in turn H⁺ ions replace these Na⁺ ions that are adsorbed to ion exchangers instead of Ca²⁺ ions. In this way, ion exchangers are regenerated. Since this replacement of Ca²⁺ with Na⁺ is stronger than that of Ca²⁺ with H⁺, ion exchangers are more efficiently regenerated.

In the embodiment employing a continuous array of multiple deionization compartments, instead of the flow route as shown in Figure 3 which allows the supply of feed water first to the anion deionization compartments and then to the cation deionization compartments alternately, it is also possible to employ another flow route which allows the supply of feed water first to the cation deionization compartments and then to the anion deionization compartments alternately, depending on the quality of feed water. Further, although in Figure 3 the concentrate water collected from each concentration compartment is directly drained from the system, the concentrate water drained from the concentration compartment on the anode side may then be introduced into the concentration compartment on the cathode side, by way of example. It should be noted that drainage lines provided separately for each concentration compartment are advantageous in inhibiting the production of calcium carbonate and preventing the deposition of scale.

Further, some other variations are possible to introduce feed water in an electrical deionization apparatus having a continuous array of multiple anion and cation deionization compartments as shown in Figure 3. By way of example, an explanation will be given in terms of an electrical deionization apparatus having two anion deionization compartments placed on one side of a water splitting compartment and two cation deionization compartments placed on the other side (hereinafter the individual compartments being referred to as, in order from the anode side, an anion deionization compartment (1), an anion deionization compartment (2), a water splitting compartment, a cation deionization compartment (2) and a cation deionization compartment (1)). In such an apparatus, feed water may be introduced into these compartments in the following order: the cation deionization compartment (1) → the cation deionization compartment (2) → the water splitting compartment → the anion deionization compartment (2) → the anion deionization compartment (1); or alternatively in the reverse order: the anion deionization compartment (1) → the anion deionization compartment (2) → the water splitting compartment → the cation deionization compartment (2) → the cation deionization compartment (1). When these flow routes are employed to introduce feed water, it is possible to simplify the structure of electrical deionization apparatuses, thus providing cost benefits and higher quality of water. Furthermore, feed water may also be introduced, for example, in the following order: the anion deionization compartment (1) → the cation deionization compartment (1) → the water splitting compartment → the anion deionization compartment (2) → the cation deionization compartment (2); or the cation deionization compartment (1) → the anion deionization compartment (1) → the water splitting compartment → the cation deionization compartment (2) → the anion deionization compartment (2).

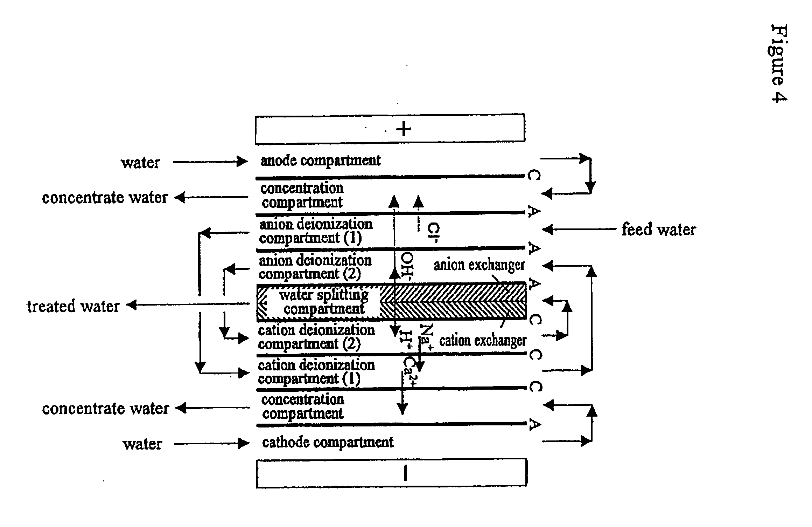

As shown in Figure 4, the electrical deionization apparatus of the present invention may also be designed to have additional cation- and anion-exchange membranes on the sides closest to the anode and cathode, respectively, to form the following compartments: an anode compartment defined by the anode and the additional cation-exchange membrane; an anion concentration compartment adjacent to the anode compartment, which is defined by the cation-exchange membrane on the anode side and another anion-exchange membrane on the cathode side; a cathode compartment defined by the cathode and the additional anion-exchange membrane; and a cation concentration compartment adjacent to the cathode compartment, which is defined by another cation-exchange membrane on the anode side and the anion-exchange membrane on the cathode side. In this way, when electrode compartments are formed outside of the concentration compartments (i.e., on the side closer to the electrode) to ensure water flow from the electrode compartments to the respective concentration compartments, it is possible to prevent the migration of deposition components into the electrode compartments and also avoid scale deposition on the electrodes induced by the accumulation of enriched ions in the compartments adjacent to the electrodes. It should be noted that only one electrode compartment may be formed on either the cathode or anode side; such an embodiment also falls within the scope of the present invention.

Likewise, some variations as stated above are also possible to introduce feed water in an electrical deionization apparatus of the configuration as shown in Figure 4 in which electrode compartments are formed independently of concentration compartments. Although in Figure 4 the water passed through the electrode compartments is then respectively supplied to their adjacent concentration compartments, the water passed through the anode compartment may then be supplied to the cathode compartment, while at the same time, RO-treated water may be supplied to the concentration compartment on the anode side and the concentrate water passed through said concentration compartment may then be supplied to the concentration compartment on the cathode side, by way of example. When these flow routes are employed to introduce water into the electrode compartments, they are advantageous in allowing gases generated in the electrode compartments to remain exclusively within the electrode compartments.

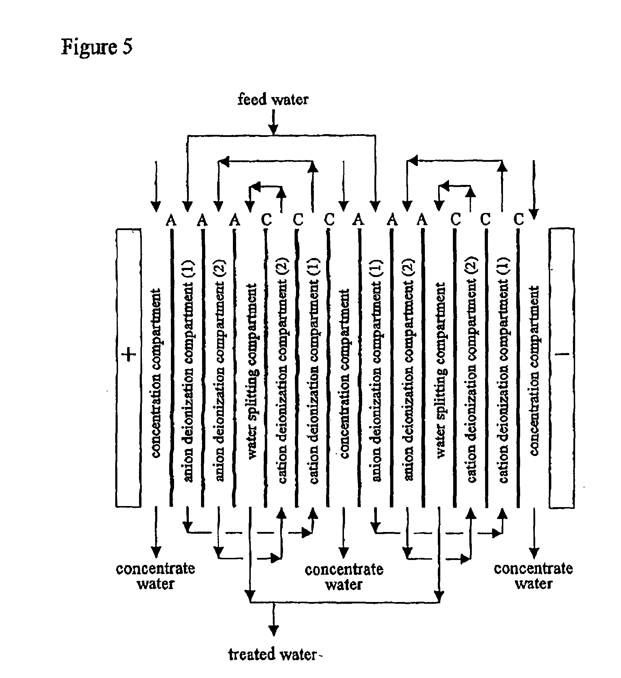

Also, the electrical deionization apparatus of the present invention may be designed to have multiple water splitting compartments, each of which is adjacent to, on its anode side, at least one anion deionization compartment defined between anion-exchange membranes and, on its cathode side, at least one cation deionization compartment defined between cation-exchange membranes. Such an embodiment also falls within the scope of the present invention. Figure 5 shows a specific example of an electrical deionization apparatus according to such an embodiment. The electrical deionization apparatus shown in Figure 5 comprises two water splitting compartments (final deionization compartments), each defined by an anion-exchange membrane on the anode side and a cation-exchange membrane on the cathode side. Two anion deionization compartments defined between anion-exchange membranes are placed on one side of each water splitting compartment, while two cation deionization compartments defined between cation-exchange membranes are placed on the other side of each water splitting compartment. The compartment defined by a cation-exchange membrane on the anode side and an anion-exchange membrane on the cathode side found in the center of the deionization apparatus serves as a concentration compartment. In the electrical deionization apparatus shown in Figure 5, two sets of anion deionization compartments/water splitting compartment/ cation deionization compartments are respectively supplied with feed water via the flow route as stated above to obtain treated water from each water splitting compartment (final deionization compartment) (see arrows in Figure 5). In this way, multiple water splitting compartments permit upsizing of electrical deionization apparatuses, and hence the present invention can be adapted to high throughput water treatment.

Examples of ion-exchange membranes, which can be used to construct the electrical deionization apparatus of the present invention, include cation-exchange membranes such as NEOSEPTA CMX (Tokuyama) and anion-exchange membranes such as NEOSEPTA AMX (Tokuyama).

As stated above, in the electrical deionization apparatus of the present invention, ion exchangers are preferably filled into at least any one of the water splitting compartment, the deionization compartment and the concentration compartment, as well as the individual electrode compartments in the case of the apparatus shown in Figure 4. The water splitting compartment filled with ion exchangers has the sites of contact between different types of ion exchangers, at which water splitting occurs. Thus, the water splitting compartment is preferably filled with ion exchangers such that an anion exchanger is filled on the anion-exchange membrane side in a face-to-face relationship with a cation exchanger filled on the cation-exchange membrane side. Alternatively, the water splitting compartment may also be filled with a mixture of anion and cation exchangers (mixed bed ion exchanger).

Likewise, once the deionization and concentration compartments are filled with ion exchangers, ions in these compartments can be facilitated to migrate. Since each deionization compartment of the electrical deionization apparatus according to the present invention is intended to remove only one of anions and cations, the anion and cation deionization compartments are preferably filled with anion and cation exchangers, respectively. Likewise, the concentration compartment is preferably filled with anion and cation exchangers on the anion- and cation-membrane sides, respectively.

Further, in an electrical deionization apparatus of the configuration as shown in Figure 4, once electrode compartments are filled with ion exchangers, pure water of extremely low ion concentration can be introduced into the electrode compartments, which is advantageous in preventing scale deposition in the electrode compartments. The electrode compartments are preferably filled with ion exchangers such that the anode and cathode compartments are filled with cation and anion exchangers, respectively. Alternatively, each electrode compartment may also be filled with a mixture of anion and cation exchangers (mixed bed ion exchanger).

In the electrical deionization apparatus of the present invention, beads of ion-exchange resin may be used as ion exchangers, which can be filled into at least any one of the water splitting compartment, the deionization compartment, the concentration compartment and the electrode compartment, as stated above. Beads of ion-exchange resin which can be used for this purpose include those known in the art which are produced using as a substrate, e.g., polystyrene beads crosslinked with divinylbenzene. For example, to prepare a strongly acidic cation-exchange resin having sulfonic groups, a substrate resin as stated above may be sulfonated with a sulfonating agent such as sulfuric acid or chlorosulfonic acid to introduce sulfonic groups into the substrate, thereby obtaining a strongly acidic cation-exchange resin. Likewise, to prepare a strongly basic anion-exchange resin having quaternary ammonium groups, a substrate resin may be chloromethylated and then reacted with a tertiary amine such as trimethylamine to introduce quaternary ammonium groups, thereby obtaining a strongly basic anion-exchange resin. These preparation procedures are well known in the art and beads of ion-exchange resin prepared by these procedures are commercially available under the trade names of, for example, Dowex MONOSPHERE 650C (Dow Chemicals), Amberlite IR-120B (Rohm and Haas), Dowex MONOSPHERE 550A (Dow Chemicals), Amberlite IRA-400 (Rohm and Haas), etc.

In the electrical deionization apparatus of the present invention, cation- and anion-exchange fiber materials may also be used as ion exchangers to be filled into at least any one of the water splitting compartment, the deionization compartment and the electrode compartment. Ion-exchange fiber materials preferably used for this purpose include those obtained by grafting ion-exchange groups to a substrate of polymeric fiber material. The substrate may consist of monofilaments of polyolefinic fiber such as polyethylene or polypropylene; alternatively, it may consist of composite fiber having the core and the sheath made of different polymers. Examples of composite fibers available for use include those having a core-sheath structure in which the sheath component is made of a polyolefinic polymer such as polyethylene and the core component is made of other polyolefinic polymer such as polypropylene. Ion-exchange groups may be introduced into such composite fiber materials by means of radiation-induced graft polymerization and the products thus obtained are preferred for use as ion-exchange fiber materials in the present invention because they have high ion-exchanging performance and are available in a uniform thickness. These ion-exchange fiber materials may be in the form of woven and non-woven fabrics.

In the electrical deionization apparatus of the present invention, ion-exchange fiber materials are preferably combined with a spacer to secure the passageway of supplied water when filled into at least any one of the water splitting compartment, the deionization compartment and the electrode compartment.

Alternatively, ion-exchange fiber materials may also be combined with an ion-conducting spacer provided with an ion-exchanging capacity and then filled into at least any one of the water splitting compartment, the deionization compartment and the electrode compartment. For example, the water splitting compartment may be filled with cation-and anion-exchange fiber materials on the cation- and anion-exchange membrane sides, respectively, in which the space between these two fiber materials is preferably loaded with cation- and anion-conducting spacers on the sides of the cation- and anion-exchange fiber materials, respectively. Also, the anion deionization compartment is preferably filled with two sheets of an anion-exchange fiber material sandwiching an anion-conducting spacer provided with an anion-exchanging capacity, while the cation deionization compartment is preferably filled with two sheets of a cation-exchange fiber material sandwiching a cation-conducting spacer provided with a cation-exchanging capacity. Further, the anode compartment is preferably filled with a cation-exchange fiber material on the cation-exchange membrane side and filled with a cation-conducting spacer on the anode side, while the cathode compartment is preferably filled with an anion-exchange fiber material on the anion-exchange membrane side and filled with an anion-conducting spacer on the cathode side. With respect to the concentration compartments, the concentration compartment on the anode side is preferably filled with an anion-conducting spacer on the anion-exchange membrane side and filled with a cation-conducting spacer on the anode side in a face-to-face relationship with each other. The concentration compartment on the cathode side is preferably filled with a cation-conducting spacer on the cation-exchange membrane and filled with an anion-conducting spacer on the cathode side in a face-to-face relationship with each other. In an electrical deionization apparatus having electrode compartments independently of concentration compartments as shown in Figure 4, each concentration compartment is preferably filled with anion- and cation-conducting spacers on the anion- and cation-exchange membrane sides, respectively, in a face-to-face relationship with each other.

Furthermore, the following modes are possible to fill ion exchangers into the water splitting compartment: (1) two cation-exchange fiber materials are filled in contact with each of ion-exchange membranes, respectively, and two sheets of a cation-conducting spacer are loaded between both cation-exchange fiber materials; (2) anion- and cation-exchange fiber materials are filled on the anion-and cation-exchange membrane sides, respectively, and two sheets of an anion-conducting spacer are loaded between these anion- and cation-exchange fiber materials; (3) anion- and cation-exchange fiber materials are filled on the anion- and cation-exchange membrane sides, respectively. and two sheets of a cation-conducting spacer are loaded between these anion- and cation-exchange fiber materials: and (4) two anion-exchange fiber materials are filled in contact with each of ion-exchange membranes, respectively, and two sheets of an anion-conducting spacer are loaded between both anion-exchange fiber materials. In particular, the above mode (1) or (4) is advantageous in facilitating further water splitting because sites for water splitting are provided at points of contact between the membranes and the fiber materials to give a large contact area.

In this way, once at least any one of the water splitting compartment, the deionization compartment and the electrode compartment is filled with, as an ion exchanger, a combination of an ion-exchange fiber material and an ion-conducting spacer provided with an ion-exchanging capacity, feed water may be distributed to ensure easy flow and hence makes it possible to lower the pressure drop. At the same time, the ion trapping capacity of the spacer contributes to a marked improvement in deionization factor, thus effectively removing carbonate, silica and organic carbon (TOC) components.

To prepare the ion-conducting spacer available for this purpose, a diagonal net made of a polyolefinic polymer resin (e.g., polyethylene conventionally used in electrodialyzers) may be used as a substrate and subjected to radiation-induced graft polymerization to attain an ion-exchanging capacity. The product thus obtained is preferred in the invention because it has high ion conductivity and allows efficient distribution of feed water.

As used herein, the term "radiation-induced graft polymerization" refers to a technique for introducing monomers into a polymer substrate, which involves irradiation of the substrate to generate radicals and subsequent reaction between the radicals and the monomers.

Examples of radioactive rays available for use in radiation-induced graft polymerization include α-ray, β-ray, γ-ray, electron beam and ultraviolet ray, with γ-ray and electron beam being preferred for use in the present invention. There are two types of procedures for radiation-induced graft polymerization: pre-irradiation graft polymerization in which a substrate to be grafted is pre-irradiated and then contacted and reacted with graft monomers; and co-irradiation graft polymerization in which a substrate is irradiated in the presence of monomers. Both of these procedures may be used in the present invention. Also, depending on how to ensure contact between monomers and a substrate, these procedures are further categorized as follows: liquid phase graft polymerization which is performed on a substrate under immersion in a monomer solution; gas phase graft polymerization which is performed on a substrate in the presence of a monomer vapor; and immersion/gas phase graft polymerization in which a substrate is pre-immersed in a monomer solution and then reacted in gas phase. Each procedure may be used in the present invention.

Ion-exchange groups to be introduced into fiber substrates such as non-woven fabrics and spacers are not limited in any particular way and various cation- and anion-exchange groups may be employed. Examples of cation-exchange groups include strongly acidic ones such as sulfonic groups, moderately acidic ones such as phosphoric groups and weakly acidic ones such as carboxyl groups. Examples of anion-exchange groups include weakly basic ones such as primary to tertiary amino groups and strongly basic ones such as quaternary ammonium groups. Alternatively, ion exchangers having both cation- and anion-exchange groups may be employed.

These various ion-exchange groups may be introduced into fiber substrates or spacers by graft polymerization (preferably radiation-induced graft polymerization) using monomers having these ion-exchange groups or by graft polymerization using polymerizable monomers having groups that can be converted into these ion-exchange groups, followed by conversion of the groups into ion-exchange groups. Examples of monomers having ion-exchange groups available for this purpose include acrylic acid (AAc), methacrylic acid, sodium styrenesulfonate (SSS). sodium methallylsulfonate, sodium allylsulfonate, sodium vinylsulfonate, vinylbenzyltrimethyl ammonium chloride (VBTAC), diethylaminoethyl methacrylate and dimethylaminopropyl acrylamide. For example, using sodium styrenesulfonate as a monomer for radiation-induced graft polymerization, strongly acidic cation-exchange sulfonic groups may be directly introduced into a substrate. Likewise, using vinylbenzyltrimethyl ammonium chloride as a monomer for radiation-induced graft polymerization, strongly basic anion-exchange quaternary ammonium groups may be directly introduced into a substrate. Examples of monomers having groups that can be converted into ion-exchange groups include acrylonitrile, acrolein, vinylpyridine, styrene, chloromethylstyrene and glycidyl methacrylate (GMA). For example, when glycidyl methacrylate is introduced into a substrate by radiation-induced graft polymerization and then reacted with a sulfonating agent such as sodium sulfite, strongly acidic cation-exchange sulfonic groups may be introduced into the substrate. Alternatively, strongly basic anion-exchange quaternary ammonium groups may be introduced into a substrate by graft polymerization of chloromethylstyrene and subsequent immersion in an aqueous solution of trimethylamine to introduce quaternary ammonium groups.

In the electrical deionization apparatus of the present invention, since the water splitting compartment serves to cause water splitting, at least one of cation and anion exchangers to be filled into the water splitting compartment is preferably a strongly acidic cation exchanger or a strongly basic anion exchanger, particularly a combination of strongly acidic cation exchanger and a strongly basic anion exchanger. This is because water splitting at the site of contact between cation and anion exchangers is more efficiently caused under a strong electric field generated between strongly acidic cation-exchange groups and strongly basic anion-exchange groups.

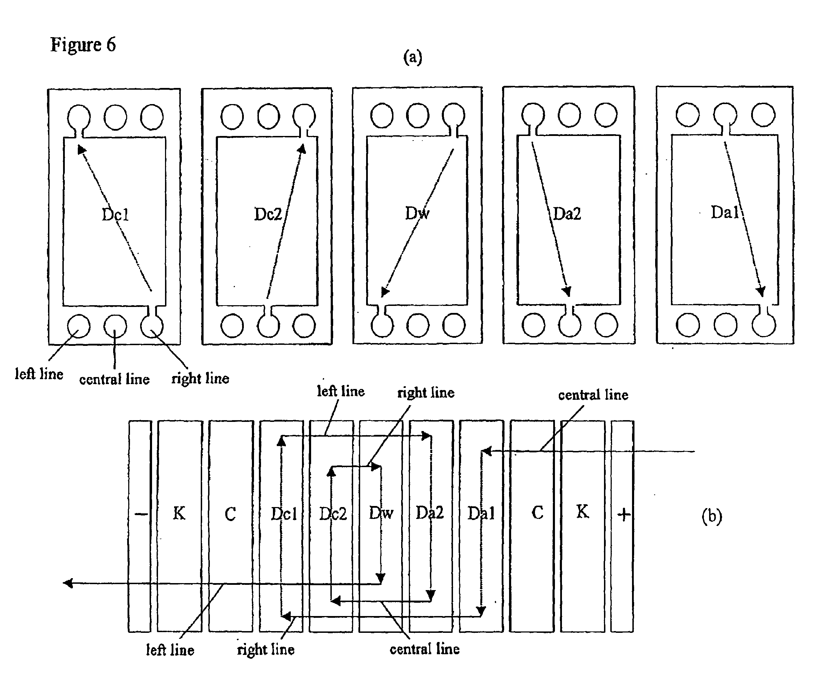

The electrical deionization apparatus of the present invention may be assembled from cell plates, each having a compartment space in its center along with flow channel-forming holes above and below the space. These cell plates are individually defined between ion-exchange membranes and the space in each plate is appropriately filled with an ion exchanger(s). For example, Figure 6 shows a configuration example of an electrical deionization apparatus composed of 5 compartments (i.e., one water splitting compartment, two cation deionization compartments on the cathode side, and two anion deionization compartments on the anode side). Each cell plate shown in Figure 6a has a compartment space in its center, along with flow channel-forming holes above and below the space. Each central space is linked to one each of the upper and lower holes. The cell plates shown in Figure 6a are assembled in the order indicated while each of them is sandwiched between ion-exchange membranes and sealed with packing to prevent water leakage between cells, to form an electrical deionization apparatus having a 5-compartment configuration as shown in Figure 6b between anode and cathode. Each compartment is appropriately filled with an ion exchanger(s). It should be noted that details are omitted in Figure 6a with respect to the cell plates constituting the concentration and electrode compartments.

In the apparatus of such a configuration, when feed water (RO-treated water) is supplied through the central line of the upper flow channel to the anion deionization compartment (Da1), the feed water passes through the deionization compartment (Da1) and exits from the right line of the lower flow channel (Figure 6a). Subsequently, the feed water flows through the cation deionization compartment (Dc1), the anion deionization compartment (Da2), the cation deionization compartment (Dc2) and the water splitting compartment (Dw) in the order stated, and then exits as treated water from the water splitting compartment (Dw) through the left line of the lower flow channel. In Figure 6, solid-line arrows denote the flow through the flow channels, while dotted-line arrows denote the flow through individual compartments. Also, K and C denote the electrode and concentration compartments, respectively.

The electrical deionization apparatus of the present invention enables extremely efficient deionization while maintaining a low operating voltage. This is not only because water splitting is limited to occur in the water splitting compartment, but also because H⁺ and OH⁻ ions generated by water splitting are prevented from recombining in the adjacent concentration compartments and hence effectively used for regeneration of ion exchangers in the individual deionization compartments, unlike conventional electrical deionization apparatuses. According to the electrical deionization apparatus of the present invention, when water comparable to RO-treated water is supplied as feed water, ultra-pure water having a conductivity of about 17.7 MΩcm⁻¹ can be obtained as treated water in continuous operation for 1000 hours at an operating voltage as low as 25 V in the apparatus having an electrode area of 100 cm² (current: 100 mA; throughput: 5L/h).

The present invention will be further described in the following examples.

### Preparation Example 1

### Preparation of anion-conducting spacer (1)

A diagonal net made of polyethylene (1.2 mm in thickness, 3 mm in pitch) was used as a substrate for an ion-conducting spacer. Vinylbenzyltrimethyl ammonium chloride (VBTAC) having quaternary ammonium groups and N,N-dimethylacrylamide (DMAA) having nonionic functional groups were used as graft monomers.

While cooling on dry ice, the polyethylene diagonal net was irradiated with γ-rays (150 kGy) under a nitrogen atmosphere. This irradiated diagonal net was immersed in a mixed monomer solution of VBTAC and DMAA and reacted at 50°C for 3 hours to give a diagonal net material grafted with VBTAC and DMAA. The resulting grafted diagonal net was dried and measured for its dry weight to calculate a graft ratio (% increase in weight) of 156%. The resulting grafted diagonal net was also calculated to have a salt splitting capacity of 198 meq/m². This was defined as anion-conducting spacer (1).

### Preparation Example 2

### Preparation of anion-conducting spacer (2)

While cooling on dry ice, the same polyethylene diagonal net as used in Preparation Example 1 was irradiated with γ-rays (150 kGy) under a nitrogen atmosphere. This irradiated diagonal net was immersed in chloromethylstyrene (Seimi Chemical Co., Ltd., trade name: CMS-AM), which had been treated with activated alumina to remove polymerization inhibitors, and reacted at 50°C for 5. hours to give a diagonal net material grafted with chloromethylstyrene (graft ratio: 90%). The resulting grafted diagonal net was immersed in a 10% aqueous solution of trimethylamine to introduce quaternary ammonium groups, followed by regeneration with sodium hydroxide solution to give a strongly basic anion-conducting spacer (salt splitting capacity: 267 meq/m²). This was defined as anion-conducting spacer (2).

### Preparation Example 3

### Preparation of cation-conducting spacer

While cooling on dry ice, the same polyethylene diagonal net as used in Preparation Example 1 was irradiated with γ-rays (150 kGy) under a nitrogen atmosphere. This irradiated diagonal net was immersed in a mixed monomer solution of sodium styrenesulfonate and acrylic acid and reacted at 75°C for 3 hours to give a grafted diagonal net material having sulfonic groups and carboxyl groups (cation-conducting spacer, graft ratio: 153%). The salt splitting capacity was 189 meq/m² and the total ion-exchange capacity was 834 meq/m².

### Preparation Example 4

### Preparation of cation-exchange non-woven fabric

A heat-bonded non-woven fabric made of 17 µm φ composite fiber having a polyethylene sheath and a polypropylene core (areal density: 55 g/m²; thickness: 0.35 mm) was used as a substrate. The non-woven fabric substrate was irradiated with electron beams (150 kGy) under a nitrogen atmosphere. The irradiated non-woven fabric substrate was immersed in a 10% methanol solution of glycidyl methacrylate and reacted at 45°C for 4 hours. After reaction, the non-woven fabric substrate was immersed in a solution of dimethylformamide at 60°C for 5 hours to remove homopolymer molecules, thereby giving a non-woven fabric material grafted with glycidyl methacrylate (graft ratio: 131%). This grafted non-woven fabric was immersed in a solution of sodium sulfite/isopropyl alcohol/water (1:1:8 by weight) and reacted at 80°C for 10 hours to give a strongly acidic cation-exchange non-woven fabric (salt splitting capacity: 471 meq/m²).

### Preparation Example 5

### Preparation of anion-exchange non-woven fabric

The same non-woven fabric substrate as used in Preparation Example 4 was irradiated with electron beams (150 kGy) under a nitrogen atmosphere. Chloromethylstyrene (Seimi Chemical Co., Ltd., trade name: CMS-AM) was passed through a layer filled with activated alumina to remove polymerization inhibitors, followed by purging with nitrogen. In the chloromethylstyrene solution treated to remove oxygen, the irradiated non-woven fabric substrate was immersed and reacted at 50°C for 6 hours. Next, the non-woven fabric was collected from the chloromethylstyrene solution and then immersed in toluene for 3 hours to remove homopolymer molecules, thereby giving a non-woven fabric material grafted with chloromethylstyrene (graft ratio: 161%). This grafted non-woven fabric was immersed in an aqueous solution of trimethylamine (10% by weight) to introduce quaternary ammonium groups, followed by regeneration with sodium hydroxide to give a strongly basic anion-exchange non-woven fabric having quaternary ammonium groups (salt splitting capacity: 350 meq/m²).

### Example 1

An electrical deionization apparatus of the configuration shown in Figure 4 was assembled. Cation-exchange (C) (Tokuyama, NEOSEPTA CMB) and anion-exchange (A) (Tokuyama, NEOSEPTA AHA) membranes were arranged between positive and negative electrodes as shown in Figure 4 to construct an electrical deionization apparatus comprising, in order from the anode side, an anode compartment, a concentration compartment, an anion deionization compartment (1), an anion deionization compartment (2), a water splitting compartment, a cation deionization compartment (2), a cation deionization compartment (1), a concentration compartment and a cathode compartment. The thickness of each compartment was 5 mm and the electrode area was 100 cm². In the anion deionization compartments, a sheet of the anion-exchange non-woven fabric prepared above was placed on the surface of each of anion-exchange membranes, and two sheets of the anion-conducting spacer (2) prepared above were loaded between the anion-exchange non-woven fabrics. In the cation deionization compartments, a sheet of the cation-exchange non-woven fabric prepared above was placed on the surface of each of cation-exchange membranes, and two sheets of the cation-conducting spacer prepared above were loaded between both cation-exchange non-woven fabrics. In the water splitting compartment, a sheet of the anion-exchange non-woven fabric prepared above was placed on the surface of the anion-exchange membrane, while a sheet of the cation-exchange non-woven fabric prepared above was placed on the surface of the cation-exchange membrane. Moreover, the space between these two non-woven fabrics was loaded with one sheet of the anion-conducting spacer (2) prepared above and one sheet of the cation-conducting spacer prepared above on the surface of the anion- and cation-exchange non-woven fabrics, respectively. Both concentration compartments were individually loaded with one sheet of the anion-conducting spacer (1) prepared above and one sheet of the cation-conducting spacer prepared above on the surface of the anion- and cation-exchange membranes, respectively. Likewise, in the anode compartment, one sheet of the cation-exchange non-woven fabric prepared above was placed on the surface of the cation-exchange membrane, and three sheets of the cation-conducting spacer prepared above were loaded on the surface of the cation-exchange non-woven fabric. In the cathode compartment, one sheet of the anion-exchange non-woven fabric prepared above was placed on the surface of the anion-exchange membrane, and three sheets of the anion-conducting spacer (1) prepared above were loaded on the surface of the anion-exchange non-woven fabric.

Under 0.1 A DC current applied between both electrodes, RO-treated water of 0.2 MΩ (water treated with a reverse osmosis membrane, silica content: 0.1 to 0.3 ppm, water temperature: 14°C to 20°C) was passed through the anion deionization compartment (1) at a flow rate of 5 L/h. The water collected from the anion deionization compartment (1) was then passed successively through the cation deionization compartment (1), the anion deionization compartment (2), the cation deionization compartment (2) and the water splitting compartment in the order stated. The same RO-treated water was also passed through the electrode and concentration compartments via the following routes: the anode compartment → the concentration compartment on the anode side; and the cathode compartment → the concentration compartment on the cathode side (flow rate: 5 L/h). After operation for 1000 hours, the operating voltage was maintained at 25 V and a water quality of 17.7 MΩcm could be produced stably. In addition, the apparatus was disassembled and observed by human eyes, indicating that there was no detectable scale in any compartments.

### Comparative Example 1

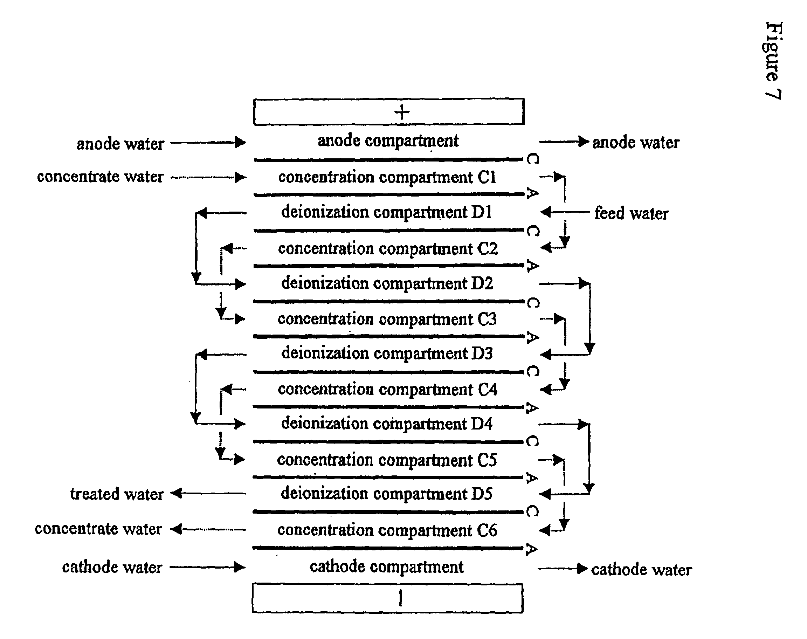

A water pass test was performed on a conventional electrical deionization apparatus. As shown in Figure 7, a, conventionally known electrical deionization apparatus having 5 deionization compartments was assembled using the same ion-exchange membranes as used in Example 1. In each deionization compartment, one sheet of the anion-exchange non-woven fabric prepared above was placed on the surface of the anion-exchange membrane, while one sheet of the cation-exchange non-woven fabric prepared above was placed on the surface of the cation-exchange membrane. Moreover, the space between these two non-woven fabrics was loaded with two sheets of the anion-conducting spacer (2) prepared above. Each concentration compartment was loaded with one sheet of the anion-conducting spacer (1) prepared above and one sheet of the cation-conducting spacer prepared above on the surface of the anion- and cation-exchange membranes, respectively. The anode compartment was loaded with four sheets of the cation-conducting spacer prepared above, while the cathode compartment was loaded with four sheets of the anion-conducting spacer (1) prepared above.

Under 0.1 A DC current applied between both electrodes, RO-treated water of 0.2 MΩ (water treated with a reverse osmosis membrane, silica content: 0.1 to 0.3 ppm, water temperature: 14°C to 20°C) was passed through the deionization compartment D1 and the concentration compartment C1, separately, at a flow rate of 5 L/h. The water collected from the deionization compartment D1 was then passed successively through the deionization compartment D2, the deionization compartment D3 and the deionization compartment D4 in the order stated to obtain treated water from the deionization compartment D4. On the other hand, the water collected from the concentration compartment C1 was then passed successively through the concentration compartment C2, the concentration compartment C3, the concentration compartment C4 and the concentration compartment C5 in the order stated. The same RO-treated water was also passed through both electrode compartments at a flow rate of 5 L/h. A water quality of 17.5 MΩ could be produced stably for 1000 hours, but the operating voltage was increased to 130 V after operation for 1000 hours. In addition, the apparatus was disassembled and observed by human eyes, indicating that scale was found on the surface of the anion-exchange membrane in the concentration compartment adjacent to the anode compartment.

### INDUSTRIAL APPLICABILITY

The present invention provides an electrical deionization apparatus based on a completely new compartment configuration which has not been intended for conventional apparatuses. The apparatus of the present invention enables stable deionization at an extremely low operating voltage without increasing the operating voltage even after long-term operation, when compared to conventional electrical deionization apparatuses.

## Claims

1. An electrical deionization apparatus comprising multiple compartments separated by cation- and anion-exchange membranes arranged between anode and cathode,
wherein the anion-exchange membrane on the anode side and the cation-exchange membrane on the cathode side together define a water splitting compartment, and
wherein an anion deionization compartment defined between anion-exchange membranes is placed on the anode side of said water splitting compartment, and a cation deionization compartment defined between cation-exchange membranes is placed on the cathode side of said water splitting compartment.

2. The electrical deionization apparatus according to claim 1, wherein a continuous array of multiple anion deionization compartments defined between anion-exchange membranes is placed on the anode side of said water splitting compartment, and a continuous array of multiple cation deionization compartments defined between cation-exchange membranes is placed on the cathode side of said water splitting compartment.

3. The electrical deionization apparatus according to claim 1 or 2, wherein an additional cation-exchange membrane is placed between the anode and the anion-exchange membrane on the anode side of the anion deionization compartment closest to the anode to form a concentration compartment defined by the additional cation-exchange membrane on the anode side and the anion-exchange membrane on the cathode side as well as an anode compartment defined by the anode and said cation-exchange membrane, and
wherein an additional anion-exchange membrane is placed between the cathode and the cation-exchange membrane on the cathode side of the cation deionization compartment closest to the cathode to form a concentration compartment defined by the cation-exchange membrane on the anode side and the additional anion-exchange membrane on the cathode side as well as a cathode compartment defined by the cathode and said anion-exchange membrane.

4. The electrical deionization apparatus according to any one of claims 1 to 3, wherein an ion exchanger(s) is filled into at least any one of the water splitting compartment, the deionization compartment, the concentration compartment and the electrode compartment.

5. The electrical deionization apparatus according to claim 4, wherein the anion deionization compartment(s) is filled with an anion exchanger, the cation deionization compartment(s) is filled with a cation exchanger, and the water splitting compartment is filled with an anion exchanger and/or a cation exchanger.

6. The electrical deionization apparatus according to claim 4, wherein the anion deionization compartment(s) is filled with an anion exchanger, the cation deionization compartment(s) is filled with a cation exchanger, and the water splitting compartment is filled with anion and cation exchangers on the anion- and cation-exchange membrane sides, respectively, in a face-to-face relationship with each other.

7. The electrical deionization apparatus according to any one of claims 4 to 6, wherein the water splitting compartment is filled with cation- and anion-exchange fiber materials on the cation- and anion-exchange membrane sides, respectively, in a face-to-face relationship with each other,
wherein the space between these two fiber materials is loaded with cation- and anion-conducting spacers on the sides of the cation- and anion-exchange fiber materials, respectively.

8. The electrical deionization apparatus according to any one of claims 4 to 7, wherein in the anion deionization compartment(s), an anion-exchange fiber material is placed on the surface of both anion-exchange membranes, and an anion-conducting spacer is loaded between both anion-exchange fiber materials, and
wherein in the cation deionization compartment(s), a cation-exchange fiber material is placed on the surface of both cation-exchange membranes, and a cation-conducting spacer is loaded between both cation-exchange fiber materials.

9. The electrical deionization apparatus according to claim 7 or 8, wherein the anion-exchange fiber material, the cation-exchange fiber material, the anion-conducting spacer and the cation-conducting spacer are each prepared by introducing ion-exchange groups into an organic polymer substrate by means of radiation-induced graft polymerization.
